# EUROPÄISCHE PATENTSCHRIFT

(11) **EP 2 030 771 B1**
(45) Veröffentlichungstag und Bekanntmachung des Hinweises auf die Patenterteilung: **22.09.2010**
(21) Anmeldenummer: 08160203.9
(22) Anmeldetag: 11.07.2008
(51) Int. Cl.: B29D 30/00, B29D 30/26

(54) **Verfahren zur kontinuierlichen Zuführung von Energie zu einer verfahrbaren Arbeitsplattform für die Herstellung von Fahrzeugreifen**
Method for continuously supplying energy to a movable work platform for producing vehicle tyres
Procédé d'alimentation en continue d'énergie vers une plateforme de travail mobile pour la fabrication de pneus de véhicule

(30) Priorität: 01.09.2007 DE 102007041681
(43) Veröffentlichungstag der Anmeldung: 04.03.2009
(73) Patentinhaber: Continental Reifen Deutschland GmbH, 30165 Hannover (DE)
(72) Erfinder: Linne, Stefan, 30900 Wedemark (DE); Pawlik, Karl-Heinz, 30455 Hannover (DE); Mehlan, Volker, 37603 Holzminden (DE); Lubitz, Frank, 31867 Lauenau (DE)
(74) Vertreter: Finger, Karsten

(56) Entgegenhaltungen:
- EP-A- 0 246 496
- EP-A- 1 566 159
- DE-A1-102005 055 609
- GB-A- 513 127
- US-A- 4 805 872

## Beschreibung

Die Erfindung betrifft ein Verfahren zur kontinuierlichen Zuführung von Energie zu einer verfahrbaren Arbeitsplattform für die Herstellung von Fahrzeugreifen.

Bei der Herstellung von Fahrzeugreifen besteht ein Herstellungskonzept darin, eine wandernde Reifenaufbautrommel an verschiedenen Bearbeitungsstationen vorbei zufahren. An den einzelnen Bearbeitungsstationen werden unterschiedliche Reifenaufbauteile auf die Reifenaufbautrommel aufgelegt, beispielsweise der Laufstreifen in aufgespulter Form. Die wandernde Reifenaufbautrommel ist dabei auf einer Arbeitsplattform angeordnet, die wiederum auf einer kreisförmigen Bearbeitungsstrecke geführt wird. Die Reifenaufbautrommel muss fortwährend mit Energie versorgt werden, um beispielsweise eine kontrollierte Rotation der Reifenaufbautrommel zu ermöglichen. Es ist nicht möglich die Arbeitsplattform über ständig mitgeführte Leitungen kontinuierlich mit Energie zu versorgen, da die Arbeitsplattform fortwährend im Kreis geführt wird und dadurch sich die Leitungen unkontrolliert aufwickeln würden. Dies könnte zu einem Leitungsbruch der mitgeführten Leitungen führen und damit zu einem Stillstand der Anlage.

Ein Beispiel für ein Transport- und Fertigungs system zur Verwendung beim Aufbau von Reifenrohlingen, das mehrere bewegliche Reifenaufbautrommeln aufweist, die auf Transporteinrichtungen positionierbar sind, ist in der Offenlegungsschrift DE 10 2005 055 609 A1 gezeigt.

Der Erfindung lag die Aufgabe zugrunde, ein Verfahren bereitzustellen, mit dem auf eine einfache Weise die Arbeitsplattform kontinuierlich mit Energie versorgt wird.

Gelöst wird die Aufgabe durch ein Verfahren gemäß Anspruch 1 mit folgenden Schritten:
- Bereitstellen einer Arbeitsplattform an einer ersten Bearbeitungsstation, wobei ein erster stationärer Stecker der ersten Bearbeitungsstation in eine erste Buchse der Arbeitsplattform eingekoppelt ist und diese mit Energie versorgt,
- Ankoppeln eines Antriebswagens an die Arbeitsplattform,
- Einkoppeln eines Steckers des Antriebswagens an eine zweite Buchse an der Arbeitsplattform, wobei über den Stecker eine Zuführung von Energie erfolgt,
- Auskoppeln des ersten stationären Steckers an der Bearbeitungsstation aus der ersten Buchse an der Arbeitsplattform
- Verfahren der Arbeitsplattform mit dem angekoppelten Antriebswagen zu einer zweiten Bearbeitungsstation
- Einkoppeln eines zweiten stationären Steckers an der zweiten Bearbeitungsstation aus der ersten Buchse an der Arbeitsplattform,
- Auskoppeln des Steckers des Antriebswagen aus der zweiten Buchse an der Arbeitsplattform,
- Zurückfahren des Antriebswagen in eine Ausgangsposition und Durchführen von Bearbeitungsschritten an der Arbeitsplattform in der zweiten Bearbeitungsstation.

Ein Vorteil der Erfindung ist insbesondere darin zu sehen, dass durch das erfindungsgemäße Verfahren eine kontinuierliche Versorgung der Arbeitsplattform mit Energie sicher gestellt ist. Das Verfahren gewährleistet, dass die Arbeitsplattform über eine der beiden Buchsen ständig mit Energie versorgt wird. Zu keinen Zeitpunkt wird somit eine Energiezuführung zu der Arbeitsplattform unterbrochen.

In einer vorteilhaften Weiterbildung der Erfindung ist vorgesehen, dass der Antriebswagen über mitgeführte Leitungen kontinuierlich mit Energie versorgt wird. Der Antriebswagen, der sich im Regelfall nur zwischen zwei Bearbeitungsstationen hin und her bewegt, wird über mitgeführte Leitungen, die vorzugsweise unter dem Antriebswagen angeordnet sind, mit Energie versorgt. Da sich die Antriebswagen nur zwischen zwei Bearbeitungsstationen hin- und herbewegen ist die Beanspruchung der mitgeführten Leitungen gering.

In einer weiteren vorteilhaften Weiterbildung der Erfindung ist vorgesehen, dass auf der Bearbeitungsstrecke mindestens zwei Arbeitsplattformen von einer Bearbeitungsstation zur nächsten Bearbeitungsstation geführt werden. Auf diese Weise können an den einzelnen Bearbeitungsstationen mehrere Fahrzeugreifen gleichzeitig hergestellt werden.

In einer weiteren vorteilhaften Weiterbildung der Erfindung ist vorgesehen, dass die einzelnen Arbeitsplattformen mit einer Vielzahl von Antriebswagen auf der Bearbeitungsstrecke verfahren werden. Die Vielzahl von Antriebswagen gewährleistet, dass die Arbeitsplattform mit hoher Geschwindigkeit von einer Bearbeitungsstation zur nächsten Bearbeitungsstation weiter gereicht werden kann.

In einer weiteren vorteilhaften Weiterbildung der Erfindung ist vorgesehen, dass die Arbeitsplattform kontinuierlich mit Energie in Form von Druckluft und elektrischen Strom versorgt wird. Druckluft ist insbesondere für die pneumatischen Vorrichtungen notwendig, die auf der Arbeitsplattform angeordnet sind.

In einer weiteren vorteilhaften Weiterbildung der Erfindung ist vorgesehen, dass die Arbeitsplattform kontinuierlich mit einer Datenleitung zur Steuerung der Arbeitsplattform verbunden ist. Insbesondere ist es notwendig die Rotationsgeschwindigkeit der Reifenaufbautrommel zu steuern.

In einer weiteren vorteilhaften Weiterbildung der Erfindung ist vorgesehen, dass die Arbeitsplattform eine drehbare Reifenaufbautrommel umfasst. Auf der drehbaren Reifenaufbautrommel werden unterschiedliche Reifenaufbauteile aufgelegt.

In einer weiteren vorteilhaften Weiterbildung der Erfindung ist vorgesehen, dass die Reifenaufbautrommel eine Bombiervorichtung für die Herstellung eines Fahrzeugreifens umfasst. Die Bombiervorrichtung sorgt dafür, dass der Fahrzeugreifen beim Auflegen von Reifenaufbauteilen eine Endkonturnahe Form besitzt.

In einer weiteren vorteilhaften Weiterbildung der Erfindung ist vorgesehen, dass an den einzelnen Bearbeitungsstationen eine Komplettierung des Fahrzeugreifens mit unterschiedlichen Reifenaufbauteilen erfolgt. Dadurch wird gewährleistet, dass die Anlage sich durch eine insgesamt hohe Flexibilität auszeichnet.

In einer weiteren vorteilhaften Weiterbildung der Erfindung ist vorgesehen, dass die Arbeitsplattform und der Antriebswagen auf Schienen verfahren werden. Auf diese Weise kann die Arbeitsplattform mit einer hohen Geschwindigkeit von Bearbeitungsstationen zu Bearbeitungsstationen weiter gereicht werden.

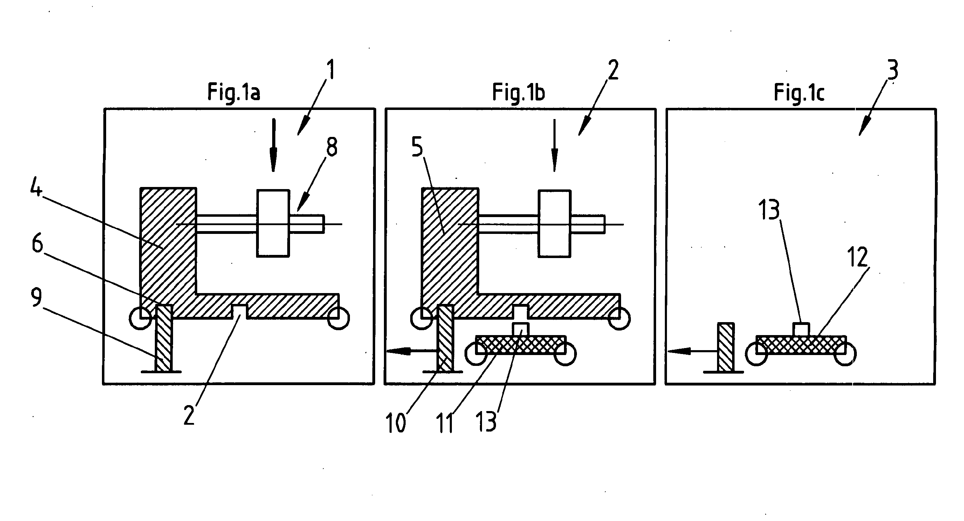

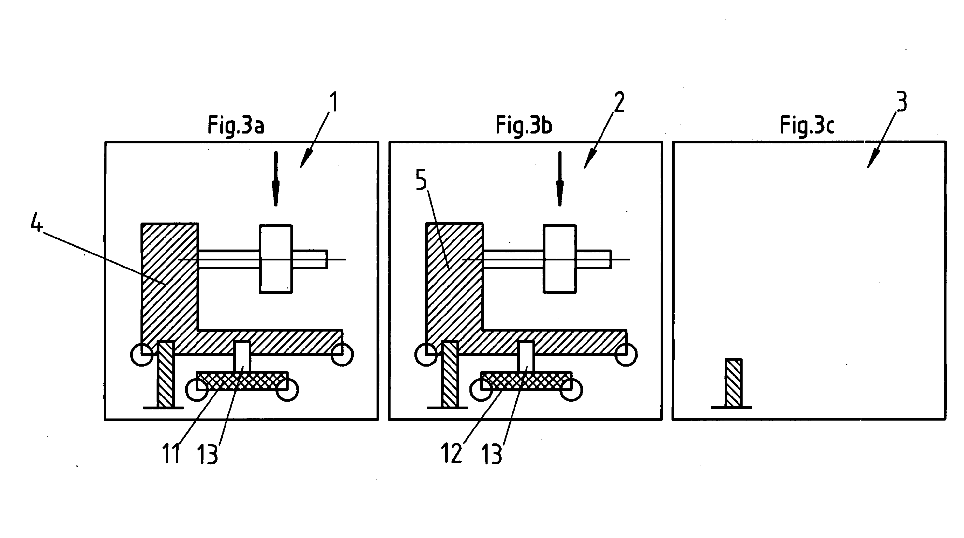

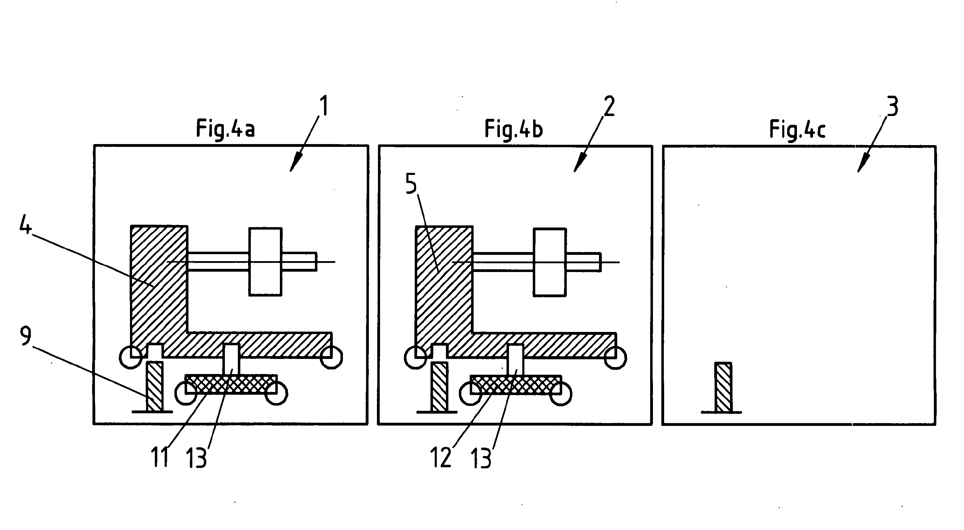

Anhand eines Ausführungsbeispiels soll die Erfindung näher erläutert werden. Es zeigen: Die Figuren 1a bis 8c unterschiedliche Verfahrensschritte.

Die Figur 1a zeigt einen Anfangszustand an der Bearbeitungsstation 1, an der eine erste Arbeitsplattform 4 steht. Auf der Arbeitsplattform 4 ist die Reifenaufbautrommel 8 mit einer Bombiervorrichtung angeordnet. Über eine Rotationsbewegung der Reifenaufbautrommel 8 werden an den einzelnen Bearbeitungsstationen Reifenaufbauteile aufgewickel. Auf der Unterseite der Arbeitsplattform 4 ist eine erste Buchse 6 und eine zweite Buchse 7 der Arbeitsplattform 4 angeordnet. Der Ausfahrbare stationäre Stecker 9 der Bearbeitungsstation 1 ist unterhalb der Arbeitsplattform 4 angeordnet. Der stationäre Stecker 9 ist wie dargestellt in die Arbeitsplattform 4 eingekoppelt und versorgt diese kontinuierlich mit Energie. Die Energie ist insbesondere dazu notwendig, um die Rotationsbewegung der Reifenaufbautrommel 8 zu steuern. Denkbar ist zum Beispiel, dass an dieser Bearbeitungsstation der Reifengürtel für den Fahrzeugreifen aufgelegt wird. Unterhalb der Arbeitsplattform 4 ist in etwa mittig eine zweite Buchse 7 der Arbeitsplattform angeordnet. Über diese parallel geschaltete zweite Buchse 7 kann die Arbeitsplattform ebenfalls mit Energie versorgt werden. Die Arbeitsplattform ist über nicht dargestellte Schienen von einer Bearbeitungsstation zur nächsten Bearbeitungsstation verfahrbar.

Die Figur 1B zeigt eine zweite Bearbeitungsstation 2. An dieser Bearbeitungsstation liegt eine zweite Arbeitsplattform 5 an. Unterhalb der Arbeitsplattform 5 ist ein erster Antriebswagen 13 angeordnet, der ebenfalls über ein Schienensystem bewegt wird. Der Antriebswagen 13 ist aus der Arbeitsplattform 5 ausgekuppelt und wird im nächsten Verfahrensschritt von der zweiten Bearbeitungsstation 2 zur ersten Bearbeitungsstation 1 in Figur 1a verfahren.

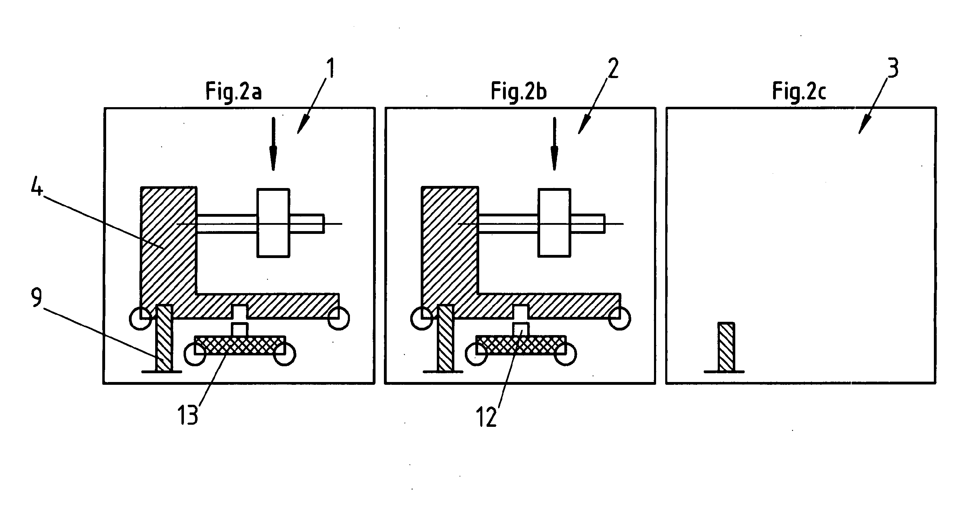

Die Figur 1c zeigt eine dritte Bearbeitungsstation, in der keine Arbeitsplattform anliegt. Der dort dargestellte zweite Antriebswagen 12 bewegt sich im nächsten Verfahrensschritt zur zweiten Bearbeitungsstation 2. Der Stecker 13 befindet sich in einem eingefahrenen Zustand. Die Figur 2a zeigt die Bearbeitungsstation 1 bei einem nächsten Verfahrensschritt. Der Antriebswagen 13 ist nunmehr unter die Arbeitsplattform 4 gefahren. Der stationäre Stecker 9 ist immer noch in die Arbeitsplattform 4 eingekoppelt und versorgt diesen mit Energie. Figur 2b und 2c zeigen, dass der Antriebswagen von der Bearbeitungsstation 3 zu der Bearbeitungsstation 2 verfahren wurde. Der Antriebswagen 12 befindet sich nunmehr unterhalb der Arbeitsplattform 5.

Figur 3a zeigt den Verfahrensschritt bei dem der Stecker 13 des Antriebswagens 11 in die zweite Buchse der Arbeitsplattform 4 eingekuppelt wird. In diesem Zustand kann die Arbeitsplattform sowohl über die erste Buchse als auch über die zweite Buchse mit entsprechender Energie versorgt werden.

Die Figur 3b zeigt wie parallel in der Bearbeitungsstation 2 der Stecker 13 des Antriebswagens 12 ebenfalls in die Arbeitsplattform 5 eingekuppelt wurde.

Die Figur 3c zeigt den Zustand an der Bearbeitungsstation 3, wobei an dieser Bearbeitungsstation keine Arbeitsplattform anliegt. Das gleiche gilt für die Figuren 4c sowie die Figuren 5c.

Die Figur 4a zeigt den Verfahrensschritt bei dem der ausfahrbare stationäre Stecker 9 aus der Arbeitsplattform 4 ausgekuppelt wird. Die Energieversorgung erfolgt nunmehr ausschließlich über den eingekuppelten Stecker 13 des Antriebswagens 11.

Die Figur 4b zeigt den parallelen Vorgang an der Bearbeitungsstation 2.

Die Figur 5a zeigt den Vorgang, wie sich der Antriebswagen 11 von der Bearbeitungsstation 1 mit der angekoppelten Arbeitsplattform 4 zur Bearbeitungsstation 2 bewegt.

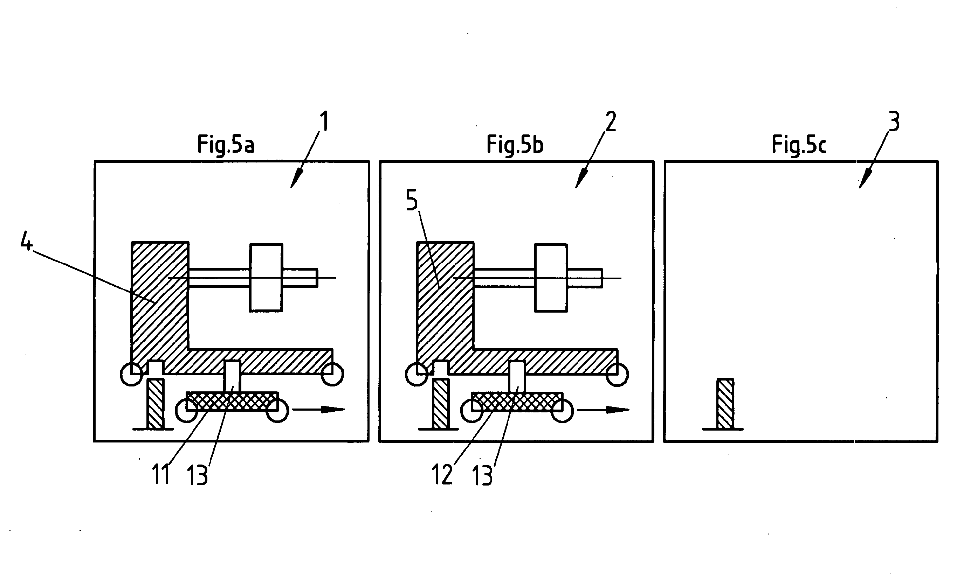

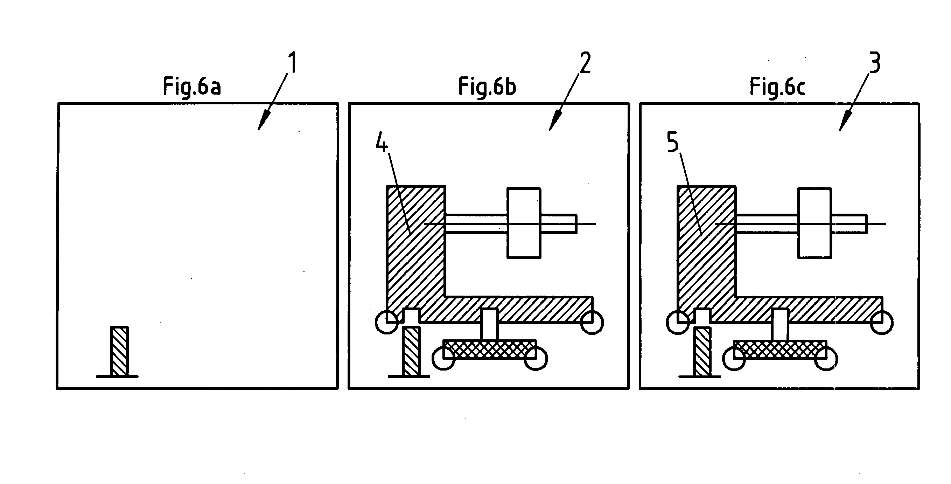

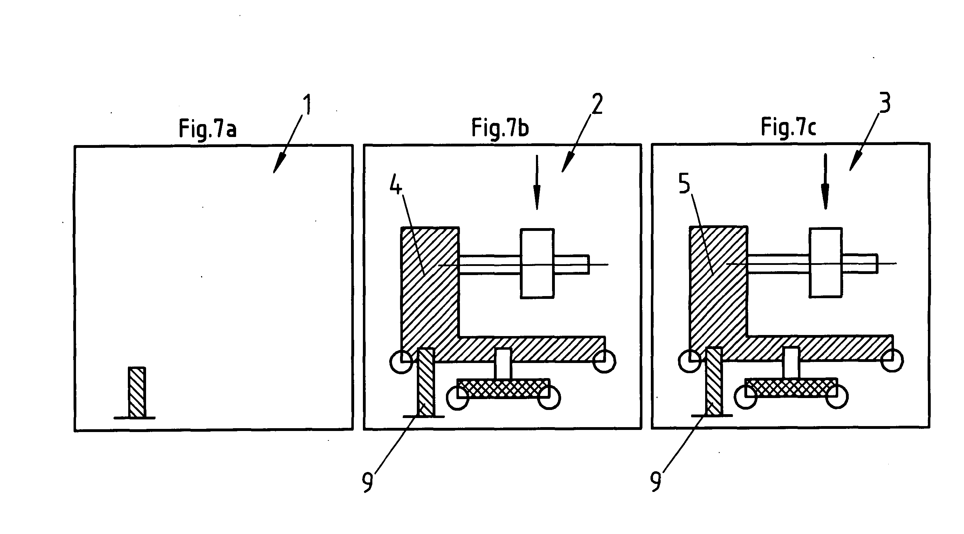

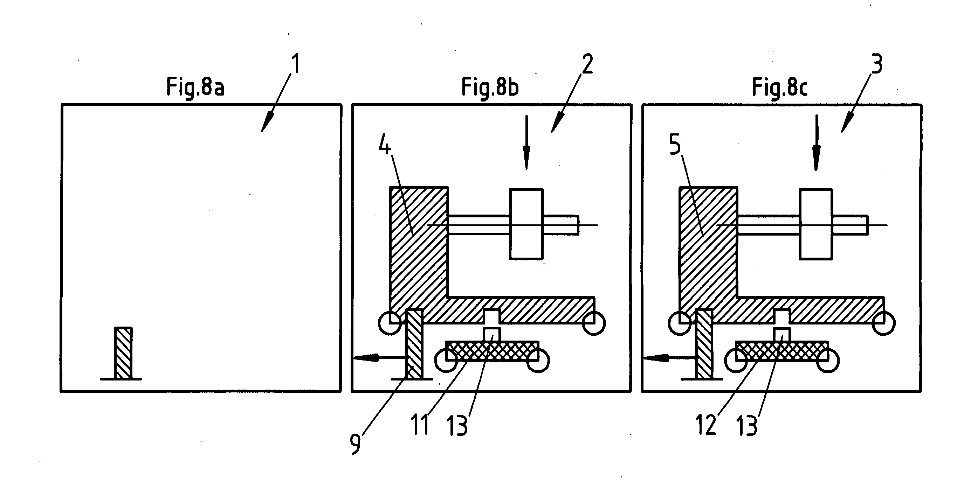

Die Figur 5b zeigt, wie gleichzeitig der Antriebswagen 12 mit der angekoppelten Arbeitsplattform 5 zur Bearbeitungsstation 3 bewegt wird. Bei diesem Bewegungsvorgang erfolgt die Energieversorgung der Arbeitsplattform über die Stecker 13 der Antriebswagen 11 und 12. Die Antriebswagen 12 und 13 werden wiederum über mitgeführte Leitungen mit Energie versorgt. Die Figuren 6a, 6b und 6c zeigen den Zustand bei dem sich die Arbeitsplattform 4 und 5 zu den Bearbeitungsstationen 2 und 3 bewegt haben. An der Bearbeitungsstation 1 liegt nunmehr keine Arbeitsplattform mehr an. Das gleiche gilt für die Figuren 7a und Figur 8a.

In der Figur 7b wird der Vorgang gezeigt bei dem der ausfahrbare stationäre Stecker 9 in die Arbeitsplattform 4 eingekuppelt wurde. Vorab wurde die Arbeitsplattform in der Bearbeitungsstation 2 verriegelt.

Die Figur 7c zeigt den parallelen Vorgang an der Bearbeitungsstation 3, bei dem der ausfahrbare Stecker 9 in die Arbeitsplattform 5 eingekoppelt wird.

Die Figur 8b zeigt den Zustand bei dem der Stecker 13 des Antriebswagen 11 ausgekoppelt wurde. Die Arbeitsplattform 4 wird nunmehr ausschließlich über den stationären Stecker 9 mit Energie versorgt. In einem nachfolgenden Verfahrensschritt würde der Antriebswagen 11 von der Bearbeitungsstation 2 zu der Bearbeitungsstation 1 zurückfahren.

Figur 8c zeigt den parallelen Vorgang an der Bearbeitungsstation 3. Der Stecker 13 des Antriebswagens 12 ist aus der Arbeitsplattform 5 ausgekoppelt worden. Im nächsten Verfahrensschritt würde der Antriebswagen 12 von der Bearbeitungsstation 3 zu der Bearbeitungsstation 2 zurück fahren. Auf diese Weise wird jeder Arbeitsplattform von einer Bearbeitungsplattform zur nächsten Bearbeitungsstation gereicht, wobei zu jeder Zeit gewährleistet ist, dass die Arbeitsplattform ohne Unterbrechungen mit Energie versorgt wird.

### Bezugszeichenliste

### (ist Teil der Beschreibung)

1 Bearbeitungsstation 1
2 Bearbeitungsstation 2
3 Bearbeitungsstation 3
4 erste Arbeitsplattform
5 zweite Arbeitsplattform
6 erste Buchse der Arbeitsplattform
7 zweite Buchse der Arbeitsplattform
8 Reifenaufbautrommel mit Bombiervorrichtung
9 Ausfahrbarer stationärer Stecker der Bearbeitungsstation 1 10 stationärer Stecker der Bearbeitungsstation2
11 erster Antriebswagen
12 zweiter Antriebswagen
13 ausfahrbarer Stecker des Antriebswagen

## Patentansprüche

1. Verfahren zur kontinuierlichen Zuführung von Energie zu einer verfahrbaren Arbeitsplattform (4, 5) für die Herstellung von Fahrzeugreifen, wobei die Arbeitsplattform (4, 5) an einer Vielzahl von Bearbeitungsstationen (1, 2, 3) vorbei auf einer im Wesentlichen kreisförmigen Bearbeitungsstrecke geführt wird, mit folgenden Schritten:
- Bereitstellen einer Arbeitsplattform (4, 5) an einer ersten Bearbeitungsstation (1, 2, 3), wobei ein erster stationärer Stecker (9) der ersten Bearbeitungsstation in eine erste Buchse (6) der Arbeitsplattform (4, 5) eingekoppelt ist und diese mit Energie versorgt,
- Ankoppeln eines Antriebswagens (11, 12) an die Arbeitsplattform (4, 5),
- Einkoppeln eines Steckers (13) des Antriebswagens (11, 12) an eine zweite Buchse (7) an der Arbeitsplattform (4, 5), wobei über den Stecker (13) eine Zuführung von Energie erfolgt,
- Auskoppeln des ersten stationären Steckers (9) an der Bearbeitungsstation (1, 2, 3) aus der ersten Buchse (6) an der Arbeitsplattform (4, 5)
- Verfahren der Arbeitsplattform (4, 5) mit dem angekoppelten Antriebswagen (11, 12) zu einer zweiten Bearbeitungsstation (2, 3)
- Einkoppeln eines zweiten stationären Steckers (10) an der zweiten Bearbeitungsstation (2, 3) aus der ersten Buchse (6) an der Arbeitsplattform (4, 5),
- Auskoppeln des Steckers (13) des Antriebswagen (11, 12) aus der zweiten Buchse (7) an der Arbeitsplattform (4, 5),
- Zurückfahren des Antriebswagen (11, 12) in eine Ausgangsposition und Durchführen von Bearbeitungsschritten an der Arbeitsplattform in der zweiten Bearbeitungsstation (1,2,3).

2. Verfahren nach Anspruch 1,
**dadurch gekennzeichnet, dass**
der Antriebswagen (11, 12) über mitgeführte Leitungen kontinuierlich mit Energie versorgt wird.

3. Verfahren nach Anspruch 1 oder 2,
**dadurch gekennzeichnet, dass**
das auf der Bearbeitungsstrecke mindestens zwei Arbeitsplattformen (4, 5) von einer Bearbeitungsstation (1, 2, 3) zur nächsten Bearbeitungsstation (1, 2, 3) geführt werden.

4. Verfahren nach einem der Ansprüche 1 bis 3,
**dadurch gekennzeichnet, dass**
die einzelnen Arbeitsplattformen (4, 5) mit einer Vielzahl von Antriebswagen (11, 12) auf der Bearbeitungsstrecke verfahren werden.

5. Verfahren nach einem der Ansprüche 1 bis 4,
**dadurch gekennzeichnet, dass**
die Arbeitsplattform (4, 5) kontinuierlich mit Energie in Form von Druckluft und elektrischen Strom versorgt wird.

6. Verfahren nach einem der Ansprüche 1 bis 5,
**dadurch gekennzeichnet, dass**
die Arbeitsplattform (4, 5) kontinuierlich mit einer Datenleitung zur Steuerung der Arbeitsplattform (4, 5) verbunden ist.

7. Verfahren nach einem der Ansprüche 1 bis 6,
**dadurch gekennzeichnet, dass**
die Arbeitsplattform (4, 5) eine drehbare Reifenaufbautrommel (8) umfasst.

8. Verfahren nach einem der Ansprüche 1 bis 7,
**dadurch gekennzeichnet, dass**
die Reifenaufbautrommel (8) eine Bombiervorichtung für die Herstellung eines Fahrzeugreifens umfasst.

9. Verfahren nach einem der Ansprüche 1 bis 8,
**dadurch gekennzeichnet, dass**
an den einzelnen Bearbeitungsstationen (1, 2, 3) eine Komplettierung des Fahrzeugreifens mit unterschiedlichen Reifenaufbauteilen erfolgt.

10. Verfahren nach einem der Ansprüche 1 bis 9,
**dadurch gekennzeichnet, dass**
die Arbeitsplattform (4, 5) und der Antriebswagen (11, 12) auf Schienen verfahren werden.

## Claims

1. Method for continuously supplying energy to a movable work platform (4, 5) for producing vehicle tyres, the work platform (4, 5) being made to pass a multiplicity of processing stations (1, 2, 3) on a substantially circular processing line, comprising the following steps:
- providing a work platform (4, 5) at a first processing station (1, 2, 3), a first stationary connector (9) of the first processing station being plugged into a first socket (6) of the work platform (4, 5) and the latter supplied with energy,
- attaching a drive car (11, 12) to the work platform (4, 5),
- plugging a connector (13) of the drive car (11, 12) into a second socket (7) on the work platform (4, 5), energy being supplied via the connector (13),
- unplugging the first stationary connector (9) at the processing station (1, 2, 3) from the first socket (6) on the work platform (4, 5),
- moving the work platform (4, 5) with the attached drive car (11, 12) to a second processing station (2, 3),
- plugging a second stationary connector (10) at the second processing station (2, 3) into the first socket (6) at the work platform (4, 5),
- unplugging the connector (13) of the drive car (11, 12) from the second socket (7) on the work platform (4, 5),
- returning the drive car (11, 12) into a starting position and carrying out processing steps on the work platform in the second processing station (2, 3).

2. Method according to Claim 1, **characterized in that** the drive car (11, 12) is continuously supplied with energy via accompanying lines.

3. Method according to Claim 1 or 2, **characterized in that** at least two work platforms (4, 5) are made to pass from one processing station (1, 2, 3) to the next processing station (1, 2, 3) on the processing line.

4. Method according to one of Claims 1 to 3, **characterized in that** the individual work platforms (4, 5) are moved on the processing line by a multiplicity of drive cars (11, 12).

5. Method according to one of Claims 1 to 4, **characterized in that** the work platform (4, 5) is continuously supplied with energy in the form of compressed air and electric current.

6. Method according to one of Claims 1 to 5, **characterized in that** the work platform (4, 5) is continuously connected to a data line for controlling the work platform (4, 5).

7. Method according to one of Claims 1 to 6, **characterized in that** the work platform (4, 5) comprises a rotatable tyre building drum (8).

8. Method according to one of Claims 1 to 7, **characterized in that** the tyre building drum (8) comprises a shaping device for producing a vehicle tyre.

9. Method according to one of Claims 1 to 8, **characterized in that** completion of the vehicle tyre with various tyre building components is performed at the individual processing stations (1, 2, 3).

10. Method according to one of Claims 1 to 9, **characterized in that** the work platform (4, 5) and the drive car (11, 12) are moved on rails.

## Revendications

1. Procédé pour l'alimentation en continu d'énergie à une plate-forme de travail mobile (4, 5) pour la fabrication de pneus de véhicules, la plate-forme de travail (4, 5) étant guidée devant une pluralité de postes d'usinage (1, 2, 3) sur une section d'usinage essentiellement de forme circulaire, comprenant les étapes consistant à :
- fournir une plate-forme de travail (4, 5) sur un premier poste d'usinage (1, 2, 3), un premier connecteur enfichable stationnaire (9) du premier poste d'usinage étant accouplé dans une première prise (6) de la plate-forme de travail (4, 5) et l'alimentant en énergie,
- raccorder un chariot d'entraînement (11, 12) à la plate-forme de travail (4, 5),
- accoupler un connecteur enfichable (13) du chariot d'entraînement (11, 12) à une deuxième prise (7) sur la plate-forme de travail (4, 5), une alimentation en énergie ayant lieu par le biais du connecteur enfichable (13),
- désaccoupler le premier connecteur enfichable stationnaire (9) sur le poste d'usinage (1, 2, 3) de la première prise (6) sur la plate-forme de travail (4, 5),
- déplacer la plate-forme de travail (4, 5) avec le chariot d'entraînement raccordé (11, 12) jusqu'à un deuxième poste d'usinage (2, 3),
- accoupler un deuxième connecteur enfichable stationnaire (10) au deuxième poste d'usinage (2, 3) à la première prise (6) sur la plate-forme de travail (4, 5),
- désaccoupler le connecteur enfichable (13) du chariot d'entraînement (11, 12) de la deuxième prise (7) sur la plate-forme de travail (4, 5),
- ramener le chariot d'entraînement (11, 12) dans une position de départ et mettre en oeuvre les étapes d'usinage sur la plate-forme de travail dans le deuxième poste d'usinage (2, 3).

2. Procédé selon la revendication 1,
**caractérisé en ce que**
le chariot d'entraînement (11, 12) est alimenté de manière continue en énergie par le biais de conduites entraînées.

3. Procédé selon la revendication 1 ou 2,
**caractérisé en ce**
**qu'**au moins deux plates-formes de travail (4, 5) sont guidées sur la section d'usinage depuis un poste d'usinage (1, 2, 3) jusqu'au poste d'usinage suivant (1, 2, 3).

4. Procédé selon l'une quelconque des revendications 1 à 3,
**caractérisé en ce que**
les plates-formes de travail individuelles (4, 5) sont déplacées avec une pluralité de chariots d'entraînement (11, 12) sur la section d'usinage.

5. Procédé selon l'une quelconque des revendications 1 à 4,
**caractérisé en ce que**
la plate-forme de travail (4, 5) est alimentée en continu en énergie sous forme d'air comprimé et de courant électrique.

6. Procédé selon l'une quelconque des revendications 1 à 5,
**caractérisé en ce que**
la plate-forme de travail (4, 5) est connectée de manière continue à une conduite de données pour la commande de la plate-forme de travail (4, 5).

7. Procédé selon l'une quelconque des revendications 1 à 6,
**caractérisé en ce que**
la plate-forme de travail (4, 5) comprend un tambour de construction de pneu (8) rotatif.

8. Procédé selon l'une quelconque des revendications 1 à 7,
**caractérisé en ce que**
le tambour de construction de pneu (8) comprend un dispositif de bombage pour la fabrication d'un pneu de véhicule.

9. Procédé selon l'une quelconque des revendications 1 à 8,
**caractérisé en ce que**
l'on effectue sur les postes d'usinage individuels (1, 2, 3) une confection du pneu de véhicule avec différents composants de pneu.

10. Procédé selon l'une quelconque des revendications 1 à 9,
**caractérisé en ce que**
la plate-forme de travail (4, 5) et le chariot d'entraînement (11, 12) sont déplacés sur des rails.
